# EUROPÄISCHE PATENTANMELDUNG

(11) **EP 2 025 511 A2**
(43) Veröffentlichungstag der Anmeldung: **18.02.2009**
(21) Anmeldenummer: 08014522.0
(22) Anmeldetag: 14.08.2008
(51) Int. Cl.: B32B 38/18, B30B 15/30, B27N 3/22, B32B 37/12

(54) **Vorrichtung und Arbeitsverfahren zur Herstelluns von großformatigen Sandwich-Leichtbauplatten**

(30) Priorität: 15.08.2007 DE 102007038674
(71) Anmelder: Wemhöner Surface Technologies GmbH & Co. KG, 32052 Herford (DE)
(72) Erfinder: Heiner Wemhöner, 32052 Herford (DE)
(74) Vertreter: Rolf, Gudrun

(57) **Zusammenfassung**

Es wird eine Vorrichtung und ein Arbeitsverfahren zur Herstellung von Sandwich-Leichtbauplatten zur Verfügung gestellt, welche effizient und störungsfrei arbeiten, was dadurch erzielt wird, dass die Vorrichtung aus einer Presse besteht, mit einem oberen und einem unteren Presstisch mit einer Beschickvorrichtung für eine untere Plattenkomponente und mit einem ein- und ausfahrbaren und während eines Pressvorgangs in der Presse verbleibenden Beschickwagens für eine mittlere und eine obere Plattenkomponente mit zwischen den Presstischen ein- und ausschwenkbaren höhenverstellbaren Tragarmen, wobei die Tragarme (9) nach unten und oben gerichtete Halteeinrichtungen (10;11) für die obere Plattenkomponente (5) und die mittlere Plattenkomponente (6) tragen, die nach einander auf der unteren Plattenkomponente (7) abgelegt werden können.

## Beschreibung

Die Erfindung betrifft eine Vorrichtung und ein Arbeitsverfahren zur Herstellung von großformatigen Sandwich-Leichtbauplatten gemäß den Oberbegriffen der Ansprüche 1 und 9.

Verfahren zum Herstellen von Platten mit einem Sandwichaufbau sind bekannt, wie beispielsweise in der EP 1 563 970 A1 veröffentlicht, wobei die Vorrichtungen zur Herstellung dieser Sandwich-Leichtbauplatten zum einen sehr kompliziert aufgebaut sind und zum anderen die Arbeitsverfahren sehr zeitaufwändig und arbeitsintensiv gestaltet sind.

Aufgabe der Erfindung ist es deshalb eine Vorrichtung und ein Arbeitsverfahren zur Herstellung von Sandwich-Leichtbauplatten zur Verfügung zu stellen, welche effizient und störungsfrei arbeiten.

Die Lösung dieser Aufgabe ergibt sich in Verbindung mit den Oberbegriffsmerkmalen der Ansprüche 1 und 9 erfindungsgemäß aus deren kennzeichnenden Teilen der entsprechenden Patentansprüche.

Besonders vorteilhaft an einer solchen erfindungsgemäßen Vorrichtung ist insbesondere, dass die verwendete Presse weder eine Unterdruckeinrichtung im oberen Presstisch benötigt, um eine obere Plattenkomponente dort vorübergehend halten zu können, noch werden für die drei zusammenzufügenden Plattenkomponenten drei separate Zuführvorrichtungen benötigt, da die mittlere und die obere Plattenkomponente gemeinsam von einem während des Pressvorgangs in der Presse verbleibenden Beschickwagen zwischen die geöffneten Presstische der Presse eingefahren werden können. Dadurch, dass der Beschickwagen Tragarme mit nach oben und unten gerichteten Halteeinrichtungen für die obere und die mittlere Piattenkomponente aufweist, lässt sich eine dritte Beschickvorrichtung vorteilhaft einsparen. Der mögliche Wegfall einer Unterdruckeinrichtung im oberen Presstisch hat den weiteren Vorteil, dass auch sehr dünnes Beschichtungsmaterial als obere Plattenkomponente Verwendung finden kann, welches entweder sehr wellig sein kann oder zum Durchsaugen neigt und daher eine enge Saugeranordnung erfordern würde.

Vorteilhafte Ausführungen und Varianten der Vorrichtung sowie des Verfahrensablaufs ergeben sich mit und in Kombination aus den nachfolgenden Patentansprüchen.

Eine besonders vorteilhaft ausgestaltete nach unten gerichtete Haltevorrichtung für die mittlere Plattenkomponente besteht aus auf einer Welle in identischer Ausrichtung voneinander beabstandet angeordneten Sicheln oder auch hakenförmigen Fortsätzen, die sich in zunächst tangentialer Richtung von der Welle erstrecken und anschließend wieder in deren Richtung zurückgebogen sind, die in einer Haltepostion der mittleren Plattenkomponente nach unten gerichtet sind und von oben in die mittlere Plattenkomponente eingreifen, wobei sie das Material der mittleren Plattenkomponente zum Teil mechanisch verdrängen oder darin einschneiden und so einen zeitweise formschlüssigen Kontakt herstellen. In einer funktionslosen Rastposition sind die Sicheln dagegen in einer waagerechten Position außer Eingriff gebracht, so dass die Haltevorrichtung zur Aufnahme der mittleren Plattenkomponente außerhalb der Presse auf diese abgesenkt und von der Haltevorrichtung aufgenommen und in der Presse auf der auf dem unteren Presstisch aufliegenden unteren Plattenkomponente wieder abgesenkt und von der mittleren Plattenkomponente gelöst werden kann.

Entsprechend einer besonders vorteilhaften Ausgestaltung der Erfindung ist jeder Beschickwagen zumindest mit zwei zueinander parallelen sichelbesetzten Wellen ausgestattet, die jeweils an sich gegenüber liegenden Seiten des Beschickwagens an Tragleisten der Haltearme angeordnet sind, wobei die Sicheln in einer Rastposition zueinander gerichtet sind und durch eine entgegengesetzte Drehung der Wellen nach unten außen in die Halteposition verschwenkbar sind, wodurch die mittlere Plattenkomponente, die üblicherweise aus wenig festem Material wie Schaum oder Papierwaben besteht, leicht zwischen den zueinander parallelen Wellen aufgespannt wird, wodurch des Weiteren ein Abgleiten der mittleren Plattenkomponente von den Sicheln sicher vermieden und die mittlere Plattenkomponente beim Transport erheblich stabilisiert werden kann.

Um dagegen ein sicheres Ablegen der mittleren Plattenkomponente zu gewährleisten, sind im Bereich der Sicheln Abstreifer, etwa in Form von Winkelblechen vorgesehen, die sich in einer außer Eingriff verdrehten Position der Sicheln geringfügig tiefer erstrecken als die Sicheln und die Wellen, wodurch erreicht wird, dass die Sicheln oder daran anhaftende Kleberreste beim Zurückschwenken kein Material aus der mittleren Plattenkomponente mit nach oben reißen können.

Von besonderem Vorteil ist des Weiteren, dass auf den Tragleisten mehrere voneinander beabstandete und sich nach oben erstreckende Rippen als obere Haltevorrichtung der oberen Plattenkomponente angeordnet sind, auf denen diese zum Transport in die Presse einfach auflegbar ist, wobei die obere Plattenkomponente zwischen den Rippen zwar geringfügig durchhängt, was aber für die Vorrichtung und das Verfahren nicht nur unschädlich ist, sondern vorteilhaft dazu genutzt werden kann, dass bei einem seitlichen Hervorziehen der Tragleisten unter der oberen Plattenkomponente zur Ablage auf der mittleren Plattenkomponente die obere Plattenkomponente zunächst im mittleren Bereich in Kontakt mit der mittleren Plattenkomponente kommt und dabei vorfixiert wird, so dass sie von den sich seitlich bewegenden Rippen nicht seitlich zwischen den Presstischen hervorbewegt werden kann.

Zudem wird so ein faltenfreies Auflegen der oberen Plattenkomponente auf der mittleren Plattenkomponente gewährleistet.

Zur weiteren Sicherstellung des korrekten Ablegens der oberen Plattenkomponente auf der mittleren Plattenkomponente sind vorteilhafterweise oberhalb der Tragleistenarme zwischen die Presstische ein- und ausschwenkbaren Anschlagarme an dem Beschickwagen vorgesehen, die vertikale, nach innen gerichtete ebene Anschlagflächen aufweisen, die im eingeschwenkten Zustand die auf den Rippen aufliegende obere Plattenkomponente seitlich halten und eine weitere vertikale Führung für diese bilden, so dass ein seitliches Abziehen der oberen Plattenkomponente beim Herausbewegen der Tragleisten auf einfach Art und Weise vollständig ausgeschlossen werden kann.

Die erfindungsgemäße Presse ist bei einer auf dem unteren Presstisch aufliegenden Plattenkomponente und einem in die Presse eingefahrenen Transportwagen mit an der mittleren Haltevorrichtung gehaltenen mittleren Plattenkomponente sowie bei auf der oberen Haltevorrichtung gelagerten oberen Plattenkomponente in vorteilhafter Weise so ausgebildet, dass das Ablegen der mittleren Plattenkomponente auf der unteren Plattenkomponente durch ein Absenken der Tragleistenarme und das Lösen der Sicheln und das Hervorziehen der Tragleistenarme unter der oberen Plattenkomponente mit dabei erfolgendem Ablegen der oberen Plattenkomponente auf der mittleren Plattenkomponente und das Herausschwenken der Anschlagarme sowie das Zusammenfahren der Presstische in wenigen Sekunden durchgeführt werden kann, wobei zur Herstellung der Sandwich-Leichtbauplatte nur ein relativ kurzer Presszyklus und nur einer geringer Druck von Nöten ist.

Bei einem mit der Presse durchführbaren Arbeitsverfahren wird nur die mittlere Plattenkomponente beidseitig vorzugsweise mit einem wärmeaktivierbaren Kleber versehen und die untere Plattenkomponente auf ihrer nach oben gerichteten Seite erwärmt auf dem unteren Presstisch abgelegt und die obere Plattenkomponente auf ihrer nach unten gerichteten Seite erwärmt und auf der oberen Haltevorrichtung abgelegt.

Bei einem anderen mit der Presse durchführbaren Arbeitsverfahren können sowohl die mittlere Plattenkomponente wie auch die dieser zugewandten Seiten der oberen und der untern Plattenkomponente mit Kleberanteilen versehen sein, wobei ein Kleberanteil aus einem Härter eines Zweikomponentenklebers bestehen kann.

Um den wärmeaktivierbaren Klebstoff oder den Zweikomponentenklebstoff ausreichend reagieren und abbinden zu lassen, ist für den Pressvorgang beispielsweise eine Zykluszeit von weniger als 30 Sekunden erforderlich. Anschließend kann die fertige Leichtbauplatte von der unteren Beschickungsvorrichtung aus der Presse herausgefahren werden.

Nachfolgend werden die Arbeitsschritte des Arbeitsverfahrens zur Herstellung einer Sandwich-Leichtbauplatte anhand von Figuren näher beschrieben. Es zeigen:

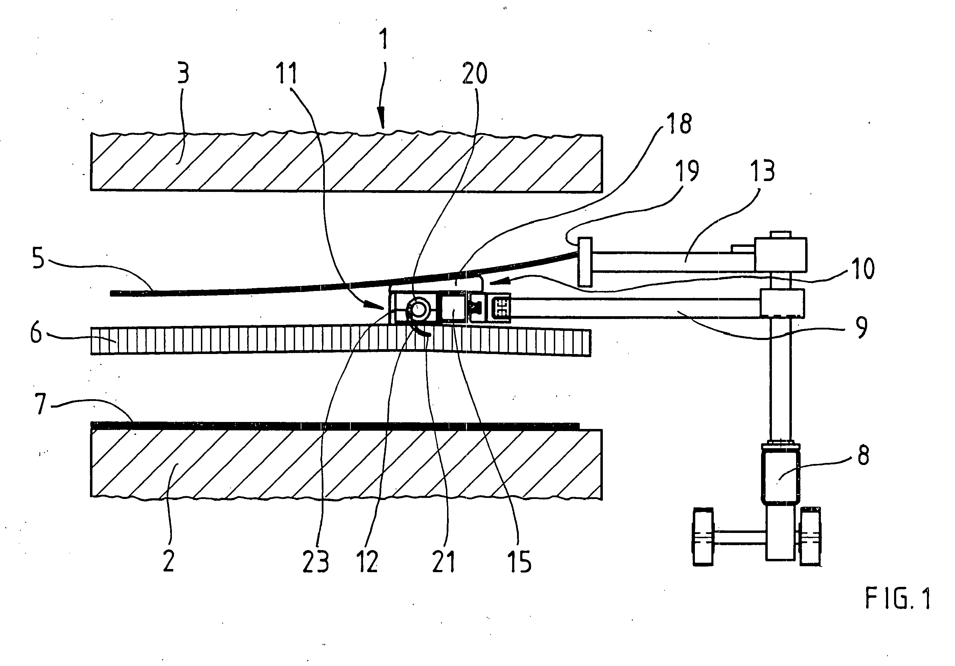

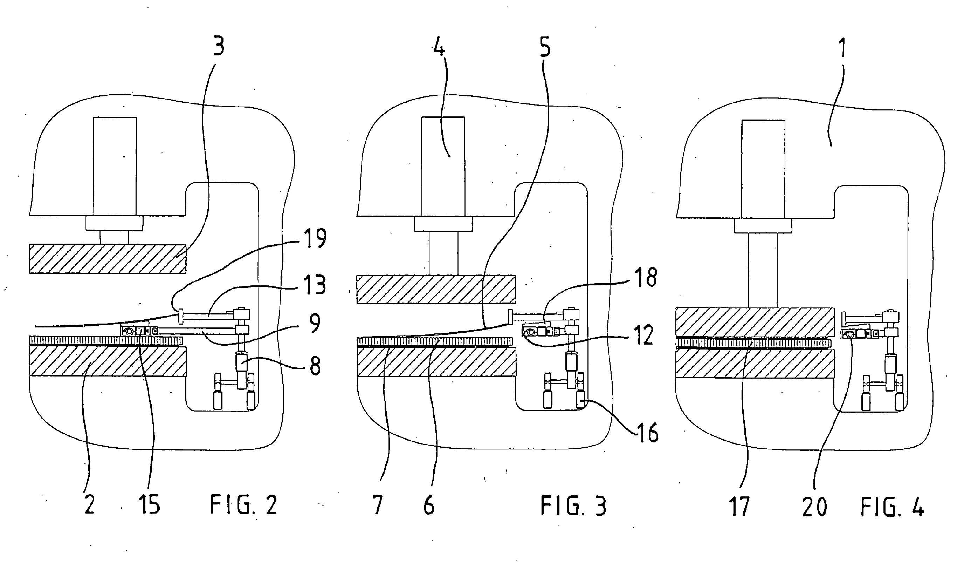

- Fig. 1 - 4: Prinzipskizzen des Arbeitsverfahrens in unterschiedlichen Arbeits- schritten einer Presse in geschnittener Seitenansicht,

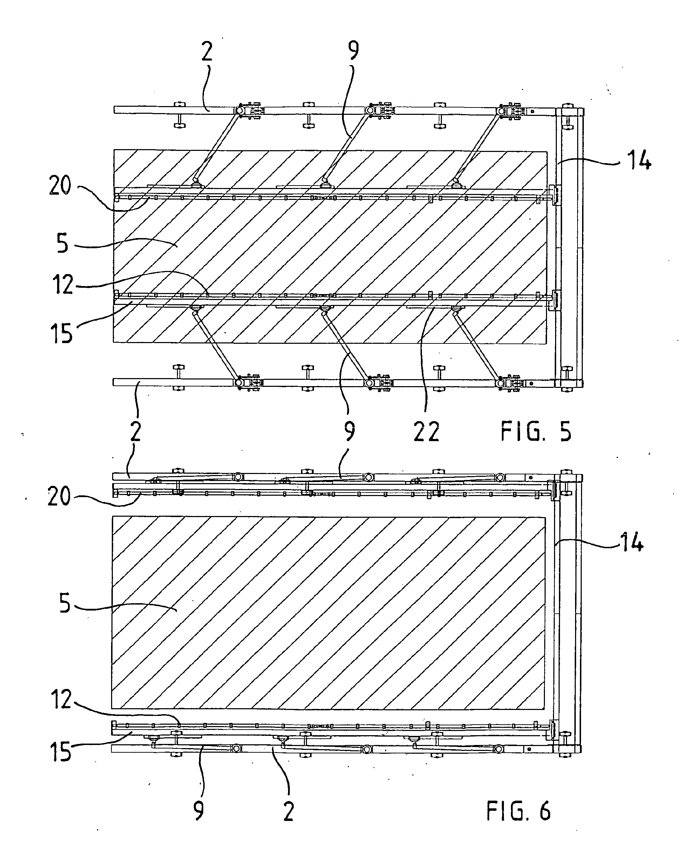

- Fig. 5: eine Draufsicht auf einen Arbeitsschritt gemäß Figur 1 und
- Fig. 6: eine Draufsicht auf einen Arbeitsschritt gemäß Figur 4

Das Arbeitsverfahren zur Herstellung einer großformatigen Sandwich-Leichtbauplatte 17 zur Herstellung von Möbeln aus einer unteren Plattenkomponente 7, einer mittleren Plattenkomponente 6 und einer oberen Plattenkomponente 5 in einer Presse 1 mit einem oberen Presstisch 3 und einem unteren Presstisch 2 und einer Beschickvorrichtung für die Plattenkomponenten 5;6,7 wird im Wesentlich so durchgeführt, dass die untere Plattenkomponente 7 und die obere Plattenkomponente 5 jeweils auf ihrer später der mittleren Plattenkomponente 6 zugewandten Seite erwärmt werden, was vor der Presse 1 beispielsweise durch Infrarotstrahler erfolgt und die mittlere Plattenkomponente 6 ebenfalls vor der Presse 1 durch eine Kleber-Auftragsvorrichtung geführt wird, wo sie beidseitig mit einem wärmeaktivierbaren Kleber versehen wird, woraufhin alle Plattenkomponenten 5;6;7 von ihren Beschickvorrichtungen in die Presse 1 eingebracht und dort übereinander gelegt und kurzzeitig unter leichtem Druck miteinander verpresst und durch schnelles Abbinden des Klebers miteinander verbunden werden.

Als Kleber wird vorteilhafterweise ein formaldehydfreier ein- oder mehrkomponentiger Kleber verwandt, wobei letzterer erst kurz vor dem Auftrag auf die mittlere Plattenkomponente 6 angemischt wird und der in erwärmten Zustand in weniger als 30 Sekunden aushärtet.

Die mittlere Plattenkomponente 6, welche aus einer Papierwabe besteht, wird vor der Kleber-Auftragsvorrichtung noch durch eine Dickenkalibrierung hindurchgeführt, wo die Kontaktflächen auf Maß geschliffen und leicht angeraut werden, was des Weiteren zur besseren Haftung des Klebers führt.

Das mit der Vorrichtung gemäß dem Hauptanspruch durchführbare Arbeitsverfahren läuft insbesondere so ab, dass die untere Plattenkomponente 7 von einer vor der Presse 1 angeordneten Transportvorrichtung an ein in der Presse 1 angeordnetes, zeichnerisch nicht dargestelltes Transportband übergeben wird und auf diesem auf dem unteren Presstisch 2 aufliegt. Die mittlere Plattenkomponente 6 wird vom Beschickwagen 8 vor der Presse 1 aufgenommen, in dem die Tragleistenarme 9 mit den Tragleisten 15 und den daran angeordneten Wellen 20 über der mittleren Plattenkomponente 6, die bereits beidseitig mit Kleber versehen ist, abgesenkt und aufgenommen wird, wobei durch ein Verdrehen der Wellen 20 die Sicheln 12 in das Material der mittleren Plattenkomponente 6 eingreifen, wobei sie dieses teilweise einschneiden.

Dadurch, dass die beidseitigen Wellen 20 einen gegenseitigen Drehsinn aufweisen, wird die abzuhebende und transportierende mittlere Plattenkomponente 6 nicht nur gehalten, sondern geringfügig zwischen den Tragleisten 15 eingespannt. Anschließend wird auf den sich nach oben erstreckenden Rippen 10 der Tragleisten 15 die obere Plattenkomponente 5 frei aufgelegt, wonach der Beschickwagen 8 in die Presse 1 einfährt, die mittlere Plattenkomponente 5 durch Absenken der Tragleistenarme 9 auf der unteren Plattenkomponente 7 ablegt, woraufhin die Haltevorrichtungen 10;11 nach Zurückschwenken der Sicheln 12 unter der oberen Plattenkomponente 5 hervorgezogen werden, die sich dabei von der Mitte aus nach außen auf der mittleren Plattenkomponente 6 auflegt, wobei ein seitliches Verrutschen von den seitlichen Anschlagflächen 19 der noch eingeschwenkten Anschlagarme 13 des Transportwagens 8 verhindert wird, so dass die obere Plattenkomponente 5 quasi frei fallend auf der mittleren Plattenkomponente 6 zur Ablage kommen kann.

Vor den Wellen 20 angeordnete Abstreifer 23, die als Winkelbleche ausgebildet sind, verhindern, dass beim Zurückschwenken der Sicheln 12 Material der mittleren Plattenkomponente 6 aus dieser herausgerissen werden kann.

Nach dem Ausfahren der Anschlagarme 13 können die Presstische 2;3 zusammenfahren und die drei Plattenkomponenten 5;6;7 miteinander verpresst werden, wobei der Kleber innerhalb kürzester Zeit soweit aushärtet, dass die entstandene Sandwich-Leichtbauplatte 17 von der unteren Transportvorrichtung bzw. dem Transportband aus der Presse 1 herausgefahren werden kann, woraufhin sich das Arbeitsverfahren mit neuen Plattenkomponenten 5;6;7 wiederholt.

Die Arbeitsschritte des in der Presse durchgeführten Anteils des Arbeitsverfahrens ändern sich prinzipiell nicht, wenn satt der vorgewärmten oberen und unteren Plattenkomponente und der mit wärmeaktivierbarem Klebstoff versehenen mittlerer Plattenkomponente mit unterschiedlichen Kleberanteilen eines Mehrkomponenten-Klebersystems vorbeschichtete Plattenkomponenten verarbeitet werden. Selbst herkömmliche Kleber können verwendet werden, wozu die Presstische jedoch erwärmbar ausgeführt sein müßten.

## Patentansprüche

1. Vorrichtung zur Herstellung von Sandwich-Leichtbauplatten aus einer Presse mit einem oberen Presstisch, einem unteren Presstisch mit einer Beschickvorrichtung für eine untere Plattenkomponente und mit einem ein- und ausfahrbaren und während eines Pressvorgangs in der Presse verbleibenden Beschickwagens für eine mittlere und eine obere Plattenkomponente mit zwischen den Presstischen ein- und ausschwenkbaren höhenverstellbaren Tragarmen, **dadurch gekennzeichnet, dass** die Tragarme (9) nach unten und oben gerichtete Halteeinrichtungen (10;11) für die obere Plattenkomponente (5) und die mittlere Plattenkomponente (6) tragen.

2. Vorrichtung nach Anspruch 1, **dadurch gekennzeichnet, dass** eine nach unten gerichtete Haltevorrichtung (11) der Tragarme (9) aus auf einer Welle (20) in identischer Ausrichtung voneinander beabstandet angeordneten Sicheln (12) oder Haken besteht, die in einer Halteposition von oben nach unten in die mittlere Plattenkomponente (6) eingreifen und in einer funktionslosen Rastposition entgegen der Sichelrichtung auf der Welle (20) außer Eingriff gedreht sind.

3. Vorrichtung nach Anspruch 2, **dadurch gekennzeichnet, dass** die Sicheln (12) vordere Spitzen aufweisen, die in der Halteposition in das Material der mittleren Plattenkomponente (6) einschneidend eingreifen.

4. Vorrichtung nach Anspruch 2, **dadurch gekennzeichnet, dass** der Beschickwagen (8) zumindest zwei zueinander parallele sichelbesetzte Wellen (20) aufweist, die an sich gegenüber liegenden Seiten des Beschickwagens (8) an Tragleisten (15) der Tragarme (9) angeordnet sind, wobei die Sicheln (12) in einer Rastposition zueinander gerichtet sind und durch eine entgegen gesetzte Drehung der Wellen (20) nach unten außen in die Halteposition verdrehbar sind.

5. Vorrichtung nach Anspruch 4, **dadurch gekennzeichnet, dass** im Bereich der Sicheln (12) Abstreifer (23) vorgesehen sind, die sich in einer außer Eingriff verdrehten Position der Sicheln (12) geringfügig tiefer erstrecken als die Sicheln (12) und die Wellen (20).

6. Vorrichtung nach Anspruch 1, **dadurch gekennzeichnet, dass** auf den Tragleisten (15) der Tragarme (9) mehrere voneinander beabstandete und nach oben vorstehende Rippen (18) als obere Haltevorrichtung (19) für die obere Plattenkomponente (5) angeordnet sind, auf denen die obere Plattenkomponente (5) zum Transport in die Presse (1) frei auflagerbar ist und die zur Ablage auf der mittleren Plattenkomponente (6) mit der Tragleiste (15) seitlich unter der oberen Plattenkomponente (5) hervorbewegbar sind.

7. Vorrichtung nach Anspruch 1, **dadurch gekennzeichnet, dass** der Beschickwagen (8) oberhalb der Tragleistenarme (9) zwischen die Presstische (2;3) ein-und ausschwenkbare Anschlagarme (13) aufweist, die vertikale, nach innen gerichtete ebene Anschlagflächen (19) besitzen, die im eingeschwenkten Zustand eine obere, auf den Rippen (10) der Tragleisten (15) aufliegende obere Plattenkomponente (5) seitlich halten und eine vertikale Führung für diese bilden.

8. Vorrichtung nach einem der vorgenannten Ansprüche, **dadurch gekennzeichnet, dass** die Presse (1) mit einer mit ihrer nach oben gerichteten erwärmten Seite der auf dem unteren Presstisch (2) aufliegenden unteren Plattenkomponente (7) und mit einem in die Presse (1) eingefahrenen Transportwagen (8) mit an dessen mittleren Haltevorrichtung gehaltenen und beidseitig mit Kleber versehenen mittleren Plattenkomponente (6) sowie mit einer an ihrer nach unten gerichteten Seit erwärmten und auf der oberen Haltevorrichtung (10) gelagerten oberen Plattenkomponente (5) so ausgebildet ist, dass das Ablegen der mittleren Plattenkomponente (6) auf der unteren Plattenkomponente (7) durch ein Absenken der Tragleistenarme (9), das Lösen der Sicheln (12) und das Hervorziehen der Tragleistenarme (9) unter der oberen Plattenkomponente (5) mit einem Ablegen der oberen Plattenkomponente (5) auf der mittleren Plattenkomponente (6), das Herausschwenken des Anschlagarmes (13) und das Zusammenfahren der Presstische (2;3) in wenigen Sekunden durchführbar ist.

9. Arbeitsverfahren zur Herstellung einer großformatigen Sandwich-Leichtbauplatte aus einer unteren Plattenkomponente (7), einer mittleren Plattenkomponente (6) und einer oberen Plattenkomponente (5) in einer Presse (1) mit einem oberen Presstisch (3) und einem unteren Presstisch (2) und Beschickvorrichtungen für die Plattenkomponenten (5;6;7) in die Presse (1), insbesondere zur Durchführung in einer Vorrichtung gem. Anspruch 1, **dadurch gekennzeichnet, dass** die untere und die obere Plattenkomponente (7;5) vor der Presse (1) jeweils auf ihrer später der mittleren Plattenkomponente (6) zugewandten Seite erwärmt oder mit einer ersten Kleberkomponente eines Zweikomponenten-Klebersystems beschichtet werden und dass die mittlere Plattenkomponente (6) vor der Presse (1) durch eine Kleber-Auftragsvorrichtung geführt und beidseitig mit einem wärmeaktivierbaren Kleber oder einer zweiten Kleberkomponente des Zweikomponenten-Klebersystems versehen wird und alle Platenkomponenten (5;6;7) von ihren Beschickvorrichtungen in die Presse (1) eingebracht und dort übereinander gelegt und unter leichtem Druck kurzzeitig miteinander verpresst werden.

10. Arbeitsverfahren nach Anspruch 9, **dadurch gekennzeichnet, dass** als Kleber ein formaldehydfreier Ein- oder Mehrkomponentenkleber verwandt wird.

11. Arbeitsverfahren nach Anspruch 9, **dadurch gekennzeichnet, dass** die mittlere Plattenkomponente (6) aus einer Papierwabe besteht, die vor der Kleber-Auftragsvorrichtung eine Dickenkalibrierung durchläuft.

12. Arbeitsverfahren zur Durchführung in einer Vorrichtung gemäß Anspruch 1, **dadurch gekennzeichnet, dass** die untere Plattenkomponente (7) von einer vor der Presse (1) angeordneten transportvorrichtung auf ein in der Presse (1) angeordnetes Transportband übergeben wird und auf diesem auf dem unteren Presstisch (2) aufliegt und der Beschickwagen (8) vor der Presse (1) durch ein Verdrehen der Wellen (20) mit seinen Sicheln (12) in eine mittlere Plattenkomponente (6) mechanisch eingreift und eine obere Plattenkomponente (5) zwischen die seitlichen Anschlagflächen (19) der Anschlagarme (13) auf die Rippen (10) der auch die Wellen (20) tragenden Tragleisten (15) aufgelegt wird, woraufhin der Beschickwagen (8) in die Presse (1) einfährt, die mittlere Plattenkomponente (6) durch Absenken der Tragleistenarme (9) auf der unteren Plattenkomponente (7) abgelegt und die Haltevorrichtung nach Zurückschwenken der Sicheln (12) unter der oberen Plattenkomponente (5) hervorbewegt wird, die sich dabei durch ein leichtes Durchhängen zunächst von der Mitte aus nach außen auf der mittleren Plattenkomponente (6) ablegt, wobei ein seitliches Verrutschen von den Anschlagflächen (19) der noch zwischen die Presstische (2;3) eingeschwenkten Anschlagarme (13) verhindert wird, die danach ausgeschwenkt werden, woraufhin die Presstische (2;3) zusammenfahren und die drei Plattenkomponenten (5;6;7) miteinander verpressen.
